# EUROPEAN PATENT APPLICATION

(11) **EP 2 947 474 A1**
(43) Date of publication of application: **25.11.2015**
(21) Application number: 14172842.8
(22) Date of filing: 17.06.2014
(51) Int. Cl.: G01S 5/02

(54) **Battery-less locator system**

(30) Priority: 19.05.2014 US 201414281043
(71) Applicant: McArthur, Paul, Plano, TX 75023 (US); Wang, Zhangyang, Urbana, IL 61801 (US)
(72) Inventor: McArthur, Paul, Plano, TX 75023 (US); Wang, Zhangyang, Urbana, IL 61801 (US)
(74) Representative: Lecomte & Partners

(57) **Abstract**

A locator device includes a body and a locator system carried by the body. The locator system includes an antenna and a power system operably associated with the antenna. The power system includes a transducer and a capacitor. The method includes harvesting electrical energy with a transducer, charging a capacitor with the harvested energy from the transducer, and powering a device operably associated with the capacitor.

## Description

### Field of the Invention

The present invention relates generally to devices configured to locate lost objects.

### Description of Related Art

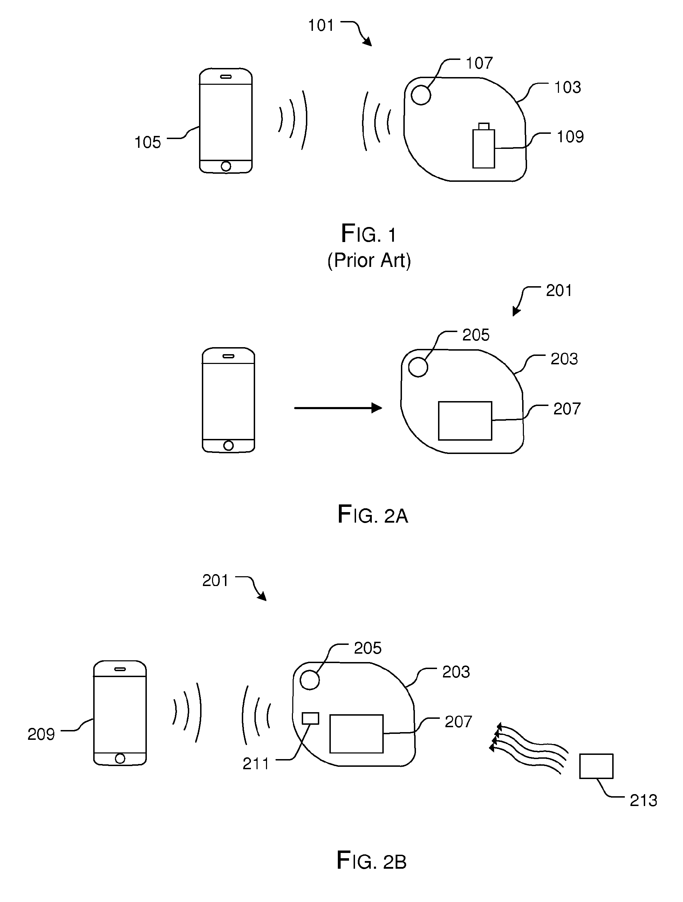

Locator devices are well known in the art and are effective means to locate misplaced objects, e.g., keys, secured to the locator device. For example, FIG. 1 is a simplified schematic of a conventional locator device 101 having a body 103 configured to carry a locator system (not shown) that communicates with, for example, a portable phone 105. During use, the locator device 101 transmits a signal to the phone 105, which in turn is used to locate device 101. Thus, in the exemplary embodiment, the locator device 101 is secured to the object via a hole 107 extending through the thickness of body 103. Disposed within body 103 is a battery 109 configured to power the locator system.

Although locator device 101 has shown to be effective in the majority of applications of use, limitations are found. For example, one major defect of conventional locator devices is the use of batteries 107 that slowly looses charge after a period of time. A weak battery in turn creates a weak signal and thus limits the range of detection. Another shortcoming is the security of the locator device when communicating the signal to the portable phone 105, which enables third parties access to the position of the locator device. Further, it should be understood that the locator device 101 uses a single type of signal transmission means to provide detection, e.g., BLUETOOTH technology.

Although great strides in the field of locator devices have been made, significant shortcomings remain.

### Technical Problem to be solved

It is therefore an objective of the present invention to provide a method and device which overcomes or alleviates at least some of the disadvantages of the prior art.

### Summary of the invention

According to a first aspect of the invention, there is provided a locator device, which comprises: a body and a locator system carried by the body. The locator system has an antenna, and a power system operably associated with the antenna. The power system has a transducer or transducer means and a capacitor or capacitor means.

The transducer is configured to capture and convert signals into electrical energy. The capacitor is capable of receiving the electrical energy from the transducer and provides electrical energy to the antenna. The antenna is configured to transmit a location signal to a location finder. An object is secured to the locator device and the locator device is configured to provide location of the object. The object is secured by fastening means which may be provided on the locator device or on the object, or both.

Preferably, the locator system may further comprise a matching circuit device configured to identify an incoming signal from the location finder.

The locator system may further preferably comprise a rectifier operably associated with the transducer and the capacitor.

The locator device may further comprise an electrical subsystem carried on the body and operably associated with locator system.

Further, the electrical subsystem may preferably be a visual indicator.

The electrical subsystem may preferably be an audible device.

Preferably, the transducer may switchable between a first transducer to a second transducer.

The transducer may preferably be an electromagnetic transducer.

According to a further aspect of the invention, there is provided a non-battery locator system for a locator device. The device comprises a power system, which has a transducer and a capacitor. The transducer captures and converts signals into electrical energy. The capacitor receives and stores the electrical energy from the transducer.

The locator system may further comprise a matching circuit device configured to identify an incoming signal from a location finder.

Preferably, the locator system may further comprise a rectifier operably associated with the transducer and the capacitor.

According to another aspect of the invention, there is provided a method to capture electrical energy. The method comprises the steps of: harvesting electrical energy with a transducer; charging a capacitor with the harvested energy from the transducer; and powering a device operably associated with the capacitor.

The process of harvesting electrical energy may preferably be achieved with an electromagnetic transducer.

Further, the method may preferably comprise transmitting a signal with an antenna operably associate with the capacitor.

The method may further comprise rectifying the harvested electrical energy with a rectifier.

### Brief description of the drawings

The novel features believed characteristic of the embodiments of the present application are set forth in the appended claims. However, the embodiments themselves, as well as a preferred mode of use, and further objectives and advantages thereof, will best be understood by reference to the following detailed description when read in conjunction with the accompanying drawings, wherein:
FIG. 1 is a simplified schematic of a conventional locator device;
FIGS. 2A and 2B are simplified schematics of a locator device in accordance with a preferred embodiment of the present application;
FIG. 3 is a simplified schematic of a locator system of FIG. 2A;
FIG. 4 is a simplified diagram of the communication system of FIG. 3;
FIG. 5 is a diagram of the communication system of FIG. 4;
FIG. 6 is a diagram of a transmission range of the system of FIG. 5;
FIG. 7 is a simplified schematic of the power system of FIG. 3; and
FIG. 8 is a diagram of the power system of FIG. 7.

While the system and method of use of the present application is susceptible to various modifications and alternative forms, specific embodiments thereof have been shown by way of example in the drawings and are herein described in detail. It should be understood, however, that the description herein of specific embodiments is not intended to limit the invention to the particular embodiment disclosed, but on the contrary, the intention is to cover all modifications, equivalents, and alternatives falling within the scope of the present application as defined by the appended claims.

### Detailed description

Illustrative embodiments of the system and method of use of the present application are provided below. It will of course be appreciated that in the development of any actual embodiment, numerous implementation-specific decisions will be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The system and method of use in accordance with the present application overcomes one or more of the above-discussed problems commonly associated with conventional locator device systems. Specifically, the locator system of the present application includes a communication system configured to selectively switch between transmission protocols for receiving and transmitting location information. The system also includes a power system configured to harvest external electrical energy around the system to power the locator system. Finally, the system utilizes a programmable identifier code unique to the locator system for security use. These and other unique features of the locator system and method of use are discussed below and illustrated in the accompanying drawings.

The system and method of use will be understood, both as to its structure and operation, from the accompanying drawings, taken in conjunction with the accompanying description. Several embodiments of the invention are presented herein. It should be understood that various components, parts, and features of the different embodiments may be combined together and/or interchanged with one another, all of which are within the scope of the present application, even though not all variations and particular embodiments are shown in the drawings. It should also be understood that the mixing and matching of features, elements, and/or functions between various embodiments is expressly contemplated herein so that one of ordinary skill in the art would appreciate from this disclosure that the features, elements, and/or functions of one embodiment may be incorporated into another embodiment as appropriate, unless described otherwise.

Referring now to the drawings wherein like reference characters identify corresponding or similar elements throughout the several views, FIGS. 2A and 2B depict simplified schematics of a locator device 201 in accordance with a preferred embodiment of the present application. It will be appreciated that locator device 201 overcomes at least one of the above-listed problems commonly associated with the conventional locator devices.

In the contemplated embodiment, locator device 201 preferably includes one or more of a body 203 having a hole 205 passing through the thickness of the body 203 and configured to secure to an object, for example, keys. Carried within the body 203 is a locator system 207 configured to provide location of the locator device 201 to, for example, a mobile phone 209 and/or other suitable devices configured to locate locator device 201. It will be appreciated that mobile phone 209 includes the necessary software programs and hardware to send and receive signals to and from device 201 in addition to providing viewing and/or audible means to assist the user in locating device 201.

One of the unique features believed characteristic of the present application is the ability to program a unique identifier number associated with device 201 via the software associated with mobile device 209 such that only the user of the mobile device 201 having knowledge of the identifier number can activate locator device 201. This feature provides significant advantages, namely, only the user has access to the location of the locator device for safety.

During use, locator device provides a signal to the mobile device 209 via a transmit antenna 315 and/or an electrical subsystem 211. In one contemplated embodiment, subsystem 211 is an audible device that provides audible location, e.g., a ring or chirp, of the device 201. In an alternative embodiment, the subsystem 211 could be a visual indicator such as a blinking light. These and other contemplated embodiments of subsystem 211 could be used as means to locate device 201.

Another unique feature believed characteristic of the present application is the use of a transducer 503 configured to harvest electrical energy from an external power source 213 and thereafter use the electrical energy to recharge a capacitor 511 and/or to provide electrical power to a load. It should be understood that cellphones, lights, computers, and other electronic devices emit electrical energy, which in turn can be harvested by locator system 207. The unique feature believed characteristic of device 201 is harvesting the electrical energy for use, which has the effect of eliminating the need for a battery.

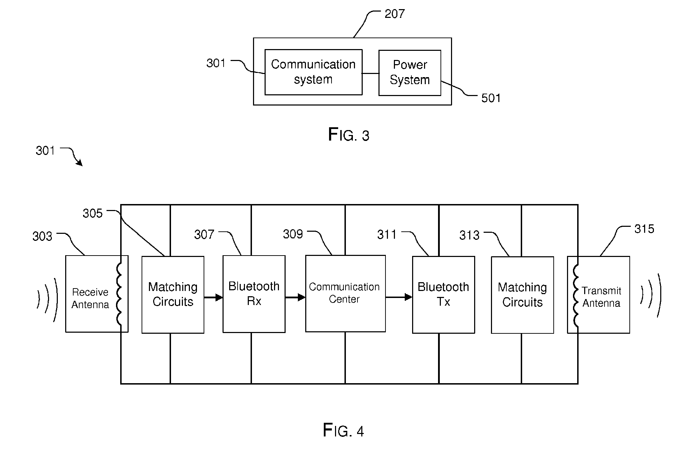

In FIG. 3, a simplified schematic of locator system 207 is shown having one or more of a communication system 301 operably associated with a power system 501. These systems are more fully discussed below.

In FIG. 4, a schematic of the communication system 301 is shown. In the contemplated embodiment, system 301 includes a receiving antenna 303 configured to receive a signal from mobile device 209. After the signal is received, system 301 matches the incoming signal to the correct protocol signal with matching circuits, as indicated by box 305. For example, the matching signal can be a signal via BLUETOOTH technology, as indicated by box 307. Thereafter, the signal is passed through a communication center 309, wherein an output signal is created to provide location information. The transmitted signal is preferably via the same protocol transmission means, and in the exemplary embodiment, via BLUETOOTH technology, as indicated by box 311. The matching circuits 313 (same as matching circuits 305) determines whether the output signal sent via transmit antenna 315 is the correct protocol to reach the mobile device 209.

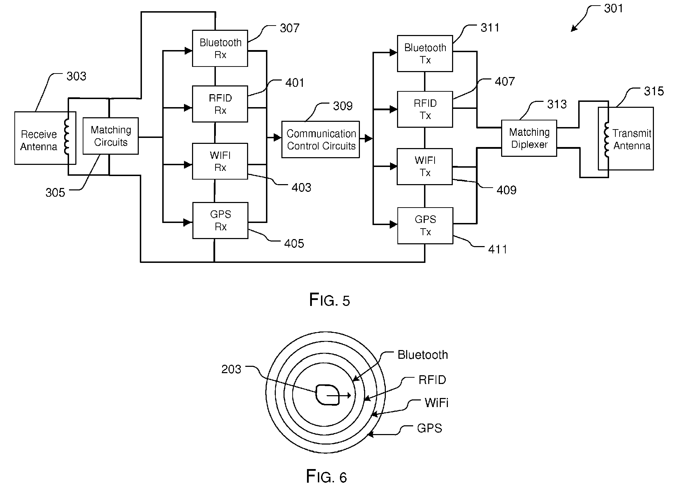

FIG. 5 provides further details of communication system 301 during use, which includes the unique feature of using multiple communication means, e.g., BLUETOOTH technology, as indicated by box 307, RFID technology, as indicated by box 401, WiFi technology, as indicated by box 403, and GPS technology, as indicated by box 405. The matching of the incoming signal is first determined by the matching circuits 305 prior to activating the communication control circuits 309. The matching of the incoming signals is achieved by switching between the signals by timed delay. For example, the matching circuits 305 first attempts to match the signal via BLUETOOTH technology, and after a predetermined time, if the signal is not matched, the matching circuits 305 switches to the next protocol, which in the exemplary embodiment is the RFID technology. It should be appreciated that one or more additional or less signal protocol technologies could be utilized in alternative embodiments.

After the incoming signal is matched, the control circuits then respond by sending location information to the mobile device 209 by BLUETOOTH technology, as indicated by box 311, RFID technology, as indicated by box 407, WiFi technology, as indicated by box 409, and GPS technology, as indicated by box 411. The transmission signal is sent to the transmit antenna, which in turn is transmitted to the mobile device 209.

In FIG. 6, a diagram is used to illustrate a range comparison between the four different types of signals discussed above. As commonly known in the art, the BLUETOOTH technology has a weaker signal range as GPS technology. In the contemplated embodiment, the matching circuits 305 switches between the different signal technologies, as discussed above.

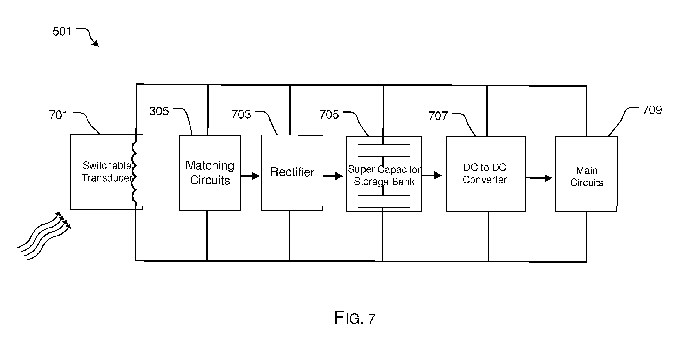

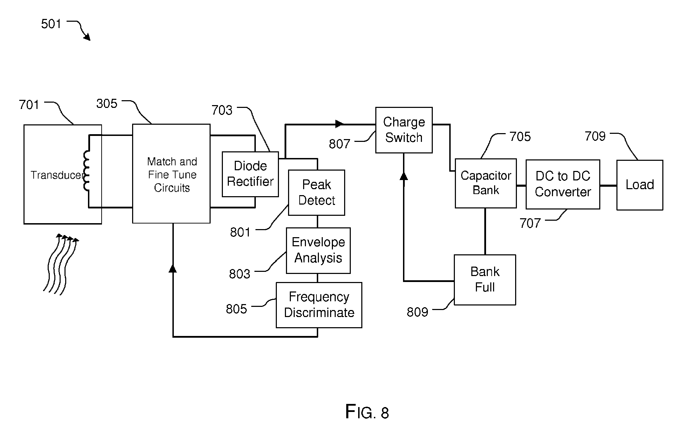

Referring now to FIGS. 7 and 8, simplified schematics of the power system 501 are shown. Power system 501 is configured to harvest electrical energy surrounding system 207 and use the electrical energy to power one or more devices associated with device 201. To achieve this feature, system 501 is provided with a switchable transducer 701 configured to collect a signal and convert the signal to a form of electrical energy. In the contemplated embodiment, transducer 701 is an electromagnetic transducer; however, it is also contemplated using a transducer that harvests light, sound, motion, and the like forms of energy and configured to covert these forms of energy to electrical energy to power one or more components of device 201.

The transducer 701 is operably associated with a rectifier 703 configured to rectify the energy from transducer 701 to usable energy prior to being received by a super capacitor storage bank 705. Thereafter, the electrical energy preferably passes through a direct current (DC) to DC converter circuit 707 prior to being received by the load 709, e.g., the main circuits of device 201.

In FIG. 8, system 501 is further shown having the feature of determining the peak detect 801, envelope analysis 803, and a frequency discrimination 805; all being used to determine the optimal electrical energy that transducer 701 can harvest from the surround sources of energy. The harvested current is then channeled through a charge switch 807 prior to being sent to capacitor bank 705. If the capacitor bank is fully charged, the charge switch is shut off, as indicated by box 809. The capacitor bank then channels the electrical energy to the DC to DC converter 707 and to load 709.

It will be appreciated that another feature unique to the present application is the ability to switch device 201 between an idle sleep mode and an active mode. This feature allows little to no electrical energy to be consumed by system 207 during idle mode and helps retain the energy stored within capacitor bank 705.

The particular embodiments disclosed above are illustrative only, as the embodiments may be modified and practiced in different but equivalent manners apparent to those skilled in the art having the benefit of the teachings herein.

## Claims

1. A locator device, comprising:
a body; and
a locator system carried by the body, the locator system having:
an antenna;
a power system operably associated with the antenna, the power system having:
a transducer; and
a capacitor;
wherein the transducer captures and converts signals into electrical energy;
wherein the capacitor receives the electrical energy from the transducer and provides electrical energy to the antenna;
wherein the antenna transmits a location signal to a location finder; and
wherein an object is secured to the locator device and the locator device is configured to provide location of the object.

2. The locator device of claim 1, the locator system further comprising:
a matching circuit device configured to identify an incoming signal from the location finder.

3. The locator device of any of claims 1 or 2, the locator system further comprising:
a rectifier operably associated with the transducer and the capacitor.

4. The locator device of any of claims 1 to 3, further comprising:
an electrical subsystem carried on the body and operably associated with locator system.

5. The locator device of claim 4, wherein the electrical subsystem is a visual indicator.

6. The locator device of claim 4, wherein the electrical subsystem is an audible device.

7. The locator device of any of claims 1 to 6, wherein the transducer is switchable between a first transducer to a second transducer.

8. The locator device of any of claims 1 to 7, wherein the transducer is an electromagnetic transducer.

9. A non-battery locator system for a locator device, comprising:
a power system, having:
a transducer; and
a capacitor;
wherein the transducer captures and converts signals into electrical energy;
wherein the capacitor receives and stores the electrical energy from the transducer.

10. The locator device of claim 9, the locator system further comprising:
a matching circuit device configured to identify an incoming signal from a location finder.

11. The locator device of any of claims 9 or 10, the locator system further comprising:
a rectifier operably associated with the transducer and the capacitor.

12. A method to capture electrical energy, comprising:
harvesting electrical energy with a transducer;
charging a capacitor with the harvested energy from the transducer; and
powering a device operably associated with the capacitor.

13. The method of claim 12, wherein the process of harvesting electrical energy is achieved with an electromagnetic transducer.

14. The method of any of claims 12 or 13, further comprising:
transmitting a signal with an antenna operably associate with the capacitor.

15. The method of any of claims 12 to 14, further comprising:
rectifying the harvested electrical energy with a rectifier.
